# EUROPEAN PATENT SPECIFICATION

(11) **EP 3 559 355 B1**
(45) Date of publication and mention of the grant of the patent: **27.01.2021**
(21) Application number: 17832225.1
(22) Date of filing: 20.12.2017
(51) Int. Cl.: E02F 9/20, B60P 1/04, E02F 9/26, G01C 15/00, G06Q 50/08, G01C 7/02

(54) **A METHOD OF OPERATING A WORK MACHINE ON A WORKSITE WITH A PARTICULAR SURFACE PROFILE AND A SYSTEM THEREFOR**
VERFAHREN ZUM BETRIEB EINER ARBEITSMASCHINE AN EINER ARBEITSSTÄTTE MIT EINEM BESTIMMTEN OBERFLÄCHENPROFIL UND EIN SYSTEM DAFÜR
PROCÉDÉ D'EXPLOITATION D'UN ENGIN DE TRAVAUX SUR UN CHANTIER PRÉSENTANT UN PROFIL DE SURFACE PARTICULIER ET UN SYSTÈME POUR LE PROCÉDÉ

(30) Priority: 23.12.2016 GB 201622084
(43) Date of publication of application: 30.10.2019
(73) Proprietor: Caterpillar SARL, 1208 Geneva (CH)
(72) Inventor: WISLEY, David R., Eastfield Peterborough PE1 5FQ (GB); TODD, Alan, Eastfield Peterborough PE1 5FQ (GB); LOONEY, Michael, Eastfield Peterborough PE1 5FQ (GB); PERCIVAL, John, Eastfield Peterborough PE1 5FQ (GB)
(74) Representative: BRP Renaud & Partner mbB Rechtsanwälte Patentanwälte Steuerberater
(86) International application number: PCT/EP2017/083962
(87) International publication number: WO 2018/115212

(56) References cited:
- US-A1- 2008 208 416
- US-A1- 2009 202 109
- US-A1- 2011 254 833
- US-A1- 2012 136 525
- US-A1- 2014 032 058

## Description

### TECHNICAL FIELD

The present disclosure relates to a method of operating a work machine and a system for performing such a method.

### BACKGROUND

Work machines are commonly employed to carry out a plurality of different tasks on a worksite. Such work machines may include hauling machines, such as dump trucks, off-highway trucks, mining trucks, on-highway trucks or lorries, articulated haulers, and earth-moving machines, such as backhoes, loaders, dozers, shovels, wheeled tractor scrapers, motor graders and excavators. The worksite may be, for example, a construction site, mine, quarry, waste dump site, aggregate site or the like. The work machines may be autonomously, semi-autonomously or manually operated to perform the tasks.

The work machines may be monitored by a monitoring system in order to determine their operating conditions and performance when performing the tasks. US-A-2016/0076226 discloses one such system in which a work machine comprises a plurality of sensors associated with the work machine for generating signals indicative of the operating conditions of the machine. The system is configured to determine the performance characteristics of the work machine based upon the signals and determine whether the work machine meets certain performance thresholds. However, using the sensors of US-A-2016/0076226 may be relatively expensive and complex. Furthermore, such an arrangement may have relatively high computational requirements and does not relate to improving the efficiency of the operation of the work machine by direct control.

US-A-2014032058 discloses a system for modifying a boundary of operation of a machine has a change in terrain sensor system. A controller determines a change in terrain based at least in part upon a change in terrain signal. If the change in terrain exceeds a threshold, the controller modifies the boundary of operation of the machine.

### SUMMARY

The present disclosure provides a method in accordance with claim 1.

The present disclosure further provides a system in accordance with claim 15.

### BRIEF DESCRIPTION OF DRAWINGS

The present disclosure is described in conjunction with the appended figures. It is emphasized that, in accordance with the standard practice in the industry, various features are not drawn to scale. In fact, the dimensions of the various features may be arbitrarily increased or reduced for clarity of discussion.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
Figure 1 illustrates an exemplary system of the present disclosure;
Figure 2 illustrates an exemplary machine control system of a work machine of the system of Figure 1; and
Figure 3 is a flow diagram of a method of operating the system of the present disclosure.

### DETAILED DESCRIPTION

The ensuing description provides preferred exemplary embodiment(s) only, and is not intended to limit the scope, applicability or configuration of the invention. Rather, the ensuing description of the preferred exemplary embodiment(s) will provide those skilled in the art with an enabling description for implementing a preferred exemplary embodiment of the invention, it being understood that various changes may be made in the function and arrangement of elements, including combinations of features from different embodiments, without departing from the scope of the invention.

Specific details are given in the following description to provide a thorough understanding of the embodiments. However, it will be understood by one of ordinary skill in the art that embodiments may be practised without these specific details. For example, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function. Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

The present disclosure generally relates to a method and system for operating at least one work machine on a worksite. At least one surveying device is operated to measure a surface profile of the worksite and the resulting surface profile data is processed to identify at least one area of the terrain and at least one gradient characteristic of that area. A memory stores machine operational data associated with at least one gradient characteristic and the appropriate machine operational data for the at least one gradient characteristic of the area is retrieved. The at least one work machine is subsequently operated in the area in a manner based upon the machine operational data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

It is to be understood that the following disclosure provides many different embodiments, or examples, for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact.

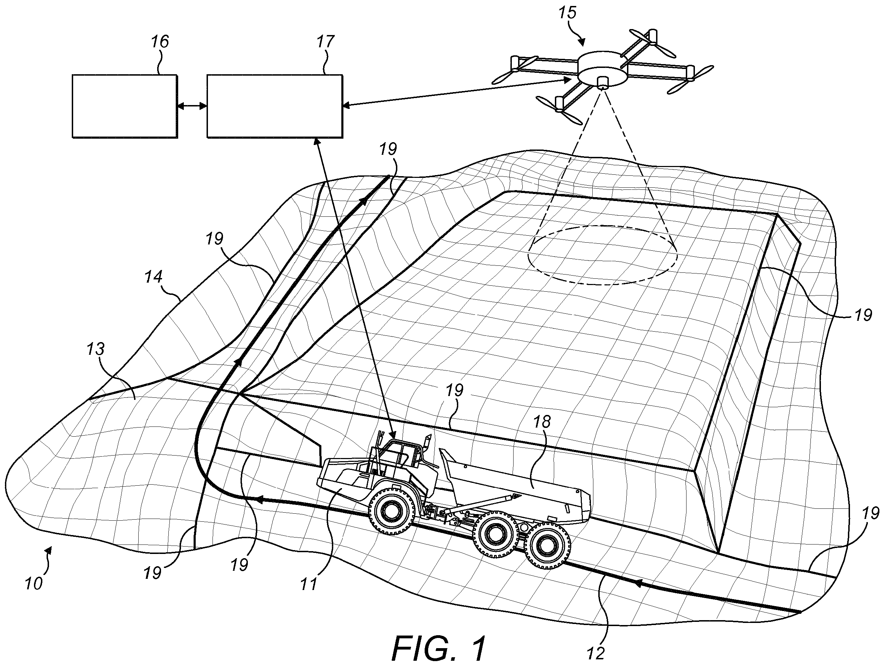

Figure 1 illustrates an embodiment of a system 10 of the present disclosure comprising at least one work machine 11 moving along a route 12 over a terrain 13 of a worksite 14. The system 10 may further comprise at least one surveying device 15 for measuring the three-dimensional surface profile of the worksite 14. The at least one surveying device 15 and at least one work machine 11 may be configured to communicate and/or transfer data with a computer system 16 via a communication system 17.

### THE WORKSITE AND WORK MACHINE(S)

The worksite 14 may comprise terrain 13 upon which earth or other material is moved and/or manipulated and may be an off-road area. The illustrated worksite 14 is a mine, although in other embodiments the worksite 14 may comprise a construction site, an open or closed mine, quarry, waste dump site, aggregate site or the like. The terrain 13 may comprise the ground of the worksite 14 over which the work machine 11 travels and the route 12 may comprise the path of the work machine 11 over the terrain 13. The route 12 may comprise a path from a first location to a second location.

The terrain 13 may comprise at least one area 19 having at least one gradient characteristic. As illustrated the route 12 may pass over a plurality of areas 19, each area 19 having at least one different gradient characteristic. The at least one gradient characteristic may comprise any characteristic related to the gradient or inclination of the at least one area 19, such as at least one of a value, range and/or variation of the gradient. The value may comprise an average, maximum or median value of the angle of inclination of the at least one area 19. The range may comprise a range between the minimum and maximum angle of inclination across the at least one area 19. The variation may comprise an identification of a variation of the angle of inclination of the gradient across the at least one area 19, such as a series of bumps. The variation may be identified where the average, maximum or median frequency and/or amplitude of the variation of the angle of inclination of the gradient of the at least one area 19 is above at least one variation threshold.

The at least one work machine 11 may be any type of work machine 11 suitable for the worksite 14 and the system 10 may comprise a plurality of the same or different work machines 11. The illustrated work machine 11 is an articulated hauler, although in other embodiments the work machine(s) 11 may comprise hauling machines, such as dump trucks, on-highway trucks or lorries and off-highway trucks, and/or earth-moving or material handling machines, such as backhoes, wheel tractor scrapers, loaders, dozers, shovels, drilling machines, motor graders, forestry machines and excavators.

The at least one work machine 11 may also comprise at least one machine structure, which may refer to any physical component, system and/or sub-system of the work machine 11, such as the frames, chassis, ground engaging members (e.g. wheels or tracks), suspension systems (e.g. suspension springs, beams, hydraulic cylinders, connections, axles and the like), engine components (e.g. fuel injectors, valves, cylinders, crankshaft, cooling system, turbochargers, superchargers, batteries, electrical systems and the like), powertrain (e.g. transmissions, torque converters, shafts, differentials and the like), the at least one work tool 18 (e.g. dump bodies, buckets, hydraulic systems, electrical systems and the like), rigid and flexible linkages and the like. In particular, the at least one work machine 11 may comprise an engine system configured to drive at least one ground engaging arrangement to move the at least one work machine 11 along the route 12. The at least one ground engagement member may comprise at least one wheel, tracks or the like. The engine system may comprise at least one power unit (e.g. an internal combustion engine, electric motor and/or hydraulic motor) configured to drive a powertrain. The powertrain may comprise at least one transmission configured to drive at least one output shaft or the like for driving the at least one ground engagement member.

The at least one work machine 11 may comprise at least one work tool 18 for performing work on the worksite 14. The form of the at least one work tool 18 may depend upon the type of the at least one work machine 11. In the case of a hauling machine the at least one work tool 18 may comprise a dump body or other arrangement for holding bulk material during transportation. The dump body may be pivotable to allow ejection of the material or may comprise an actuatable ejector member within the dump body to enable ejection of the material. In the case of an earth-moving or material handling machine, the at least one work tool 18 may be of any suitable type for digging, lifting or otherwise manipulating material of the worksite 14, such as a bucket, shovel, conveyor or the like.

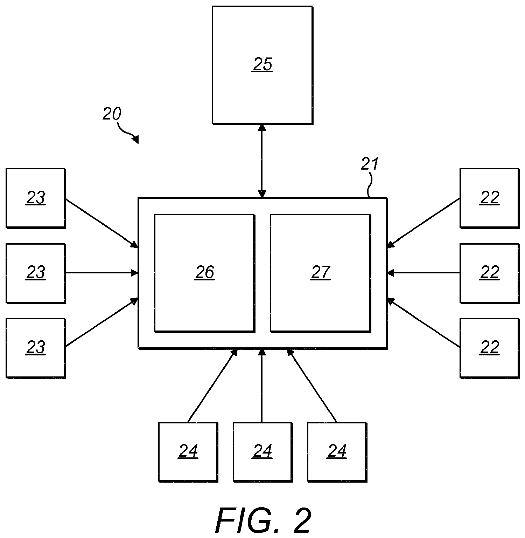

The at least one work machine 11 may comprise a machine control system 20 as schematically illustrated in Figure 2. The machine control system 20 may comprise a controller 21 communicatively connected (via a wired or wireless connection) to at least one input 22, at least one output 23, at least one sensor 24 and at least one machine communication module 25. The controller 21 may be of any suitable known type and may comprise an engine control unit (ECU) or the like. The controller 21 may comprise a memory 26, which may store instructions or algorithms in the form of data, and a processing unit 27, which may be configured to perform operations based upon the instructions. The memory 26 may comprise any suitable computer-accessible or non-transitory storage medium for storing computer program instructions, such as RAM, SDRAM, DDR SDRAM, RDRAM, SRAM, ROM, magnetic media, optical media and the like. The processing unit 27 may comprise any suitable processor capable of executing memory-stored instructions, such as a microprocessor, uniprocessor, a multiprocessor and the like. The controller 21 may further comprise a graphics processing unit for rendering objects for viewing on a display. The controller 21 may receive data from at least one input 22, at least one sensor 24 and/or the machine communication module 25 and perform operations based upon the instructions, such as by sending data to an output 23, at least one sensor 24 and/or the machine communication module 25, performing calculations or carrying out logic-based tasks.

The machine communication module 25, discussed in further detail below, may be configured to transfer data between the machine control system 20 and the communication system 17, computer system 16, surveying device 15 and/or another machine control system 20 of another work machine 11.

The at least one input 22 may comprise a device for operation by, or receiving at least one input from, an operator for controlling the work machine 11, such as a gear selector, a steering wheel, a brake pedal, a speed selector (e.g. an accelerator pedal), a work tool 18 manipulator (e.g. a joystick), a dashboard button and the like. The at least one input 22 may relate to at least one controllable characteristic of the work machine 11, such as a gear selection, movement of the steering wheel, a braking command, a speed command, a work tool 18 manipulation, a button press or the like.

The at least one output 23 may comprise a device for operating the at least one work machine 11 in accordance with at least one controllable characteristic of the at least one work machine 11. Exemplary outputs 23 include the transmission, the engine or any part thereof, a valve system, a fuel injection system, an electric, pneumatic and/or hydraulic system for controlling the work machine 11 and/or at least one work tool 18 (particularly a dump body, ejector body or conveyor), a steering mechanism, brake actuators, a differential lock, a display for displaying information to an operator, lights and the like. The at least one controllable characteristic implemented by the at least one output 23 may be any type of operating condition of the work machine 11, such as, for example, a machine speed, a machine direction (i.e. a direction of travel of the at least one work machine 11), an engine speed, a powertrain load, a braking or retarding load, gear selection or transmission ratio, work tool 18 positioning, work tool 18 manipulation (e.g. opening or closing shears, a bucket and the like), a payload measurement (e.g. the load caused by material in a dump body , bucket or the like), fluid pressure in hydraulic circuits (e.g. for controlling the work tool 18), electric current or voltage levels and the like.

The at least one sensor 24 may comprise any device configured to determine and monitor at least one actual operating condition of the work machine 11 and generate actual machine operational data indicative of the at least one actual operating condition. The at least one actual operating condition may comprise at least one operating condition as described above or indicative of the state of the work machine 11 or a component, system or subsystem thereof. For example, the at least one sensor 24 may be configured to sense operation of at least one input 22 or the effect of the operation of at least one output 23.

The at least one sensor 24 may be configured to determine the at least one operating condition or state of at least one machine structure of the work machine 11. The at least one sensor 24 may comprise a strain sensor for determining the stress and/or strain on a machine structure (e.g. the stresses experienced by a beam of a suspension system), a load sensor for determining the load upon a machine structure (e.g. a sensor positioned to determine the payload in a dump body), a temperature sensor for determining the temperature of a machine structure (e.g. the temperature of hydraulic fluid or brakes), a speed sensor for determining the speed/velocity of a machine structure (e.g. an engine output speed sensor for detecting the rotational velocity of at least one output shaft from the engine), an inclination sensor for determining the three-dimensional inclination of the at least one work machine 11 on the terrain 13 and generating inclination data indicative of the inclination, a position sensor for determining the position of a machine structure (e.g. the position of parts of the at least one work tool 18), an accelerometer for measuring the acceleration experienced by at least one machine structure and/or the at least one work machine 11 due to vibrations and/or a load, and the like. In particular, at least one accelerometer may be arranged to measure the load input to at least one ground engaging means.

The at least one sensor 24 may comprise a dump body monitor for determining the status of the dump body, if present on the at least one work machine 11. In particular, the dump body monitor may comprise an inclination sensor for measuring the inclination of a pivotable dump body, a position sensor for determining the position of an ejector member of a dump body with an ejector and/or a load sensor for determining the load of material, if any, in the dump body.

The system 10 may further comprise a navigation system for determining the position of the at least one work machine 11 and generating actual route data indicative of its position on the worksite 14. The navigation system may determine the location of the at least one work machine 11 on the Earth's surface and/or may determine the location of the at least one work machine 11 relative to a reference position on the worksite 14. The actual route data may comprise the position of the work machine 11 in two dimensional coordinates X, Y representing its position on a plane parallel to the surface of the worksite 14. The route data may also comprise a third dimensional coordinate Z indicative of the "height" of the machine relative to a reference height. The actual route data may comprise a plurality of coordinates indicating the position of the at least one work machine 11 as it moves over the terrain 13 and the plurality of coordinates may define the route 12. The plurality of coordinates may be generated by sampling the position of the at least one work machine 11 at time intervals.

The navigation system may comprise any suitable navigation system. In particular, the at least one sensor 24 may comprise a position sensor operable to determine the position of the work machine 11 via a global navigation satellite system, such as global positioning system (GPS), or via triangulation with communication masts. Alternatively, the navigation system may be embodied in the machine control system 20, which may substantially continuously monitor at least the speed and direction of the work machine 11 as it moves over the worksite 14 between a first and second location. The coordinates of the first location may be input into the machine control system 20 and stored on the memory. Based upon the monitored speed and direction of the work machine 11 the machine control system 20 may be operable to determine the coordinates of the second location.

### THE SURVEYING DEVICE(S)

The at least one surveying device 15 may be configured to measure the three-dimensional surface profile or topography of the terrain 13 of the worksite 14 and generate actual surface profile data indicative of the actual surface profile. In particular, the at least one surveying device 15 may be configured to generate actual surface profile data in the form of a point cloud of the terrain 13. The actual surface profile data may be processed, such as by extrapolation between points of a point cloud, to create a "virtual map" and/or to perform further operations, as discussed below. The at least one surveying device 15 may utilise any method, sensor, instrumentation or other apparatus known in the art to obtain the actual surface profile data, such as photogrammetry, radar, LIDAR, laser scanners, video systems, audio systems or a combination thereof.

The at least one surveying device 15 may comprise a device separate from the at least one work machine 11. The at least one surveying device 15 may comprise a surveying device communication module configured to communicate with, and send the actual surface profile data to, the at least one work machine 11, computer system 16 and/or communication system 17. The at least one surveying device 15 may comprise an aerial platform, such as a manned aircraft or unmanned aerial vehicle ("UAV"), or a terrestrial (i.e. land based) platform, such as a dedicated surface profile scanning vehicle (manned or unmanned).

Alternatively, the at least one surveying device 15 may be partly or entirely embodied in the at least one work machine 11. For example, the at least one sensor 24 may comprise instrumentation for generating the actual surface profile data as the at least one work machine 11 moves over the worksite 14. The instrumentation may operate according to any suitable surface profiling method, such as video, laser scanning, imaging and the like.

The system 10 may comprise a plurality of surveying devices 15, which may be of different types and use different surveying methods. In particular, at least one surveying device 15 may comprise a UAV comprising a photogrammetric system and at least one surveying device 15 may be a LIDAR system located on at least one work machine 11. The UAV may generate initial actual surface profile data which may be updated with actual surface profile data from the LIDAR system as the work machine 11 moves material and alters the surface profile of the terrain 13.

The actual surface profile data collected by the at least one surveying device 15 may comprise at least one reference position associated with it such that the actual route data and actual surface profile data may be referenced to one another. For example, the actual surface profile data and actual route data may comprise at least one coordinate in the form of a geographic latitude and longitude of the Earth's surface. As a result, the actual route data may be accurately mapped to a location on the actual surface profile data such that the position of the work machine 11 on the worksite 14 may be determined. The at least one surveying device 15 may utilise the navigation system and/or other positioning system for determining the position of the at least one surveying device 15 as it gathers the actual surface profile data such that the at least one reference position can be determined.

### THE COMPUTER SYSTEM

The computer system 16 may be configured to receive actual surface profile data, determine at least one area of the surface profile and terrain 13, store machine operational data associated with at least one gradient characteristic, determine at least one gradient characteristic of the at least one area, retrieve appropriate machine operational data for the at least one area and assist in operating the at least one work machine in the at least one area based upon the machine operational data. The computer system 16 may be separate from the work machine 11 and at least one surveying device 15 as illustrated (e.g. by being located in a separate housing) and they may communicate data within one another via the communication system 17. The computer system 16 may be located in a monitoring station on the worksite 14 or at a station remote to the worksite 14. For example, the computer system 16 may be located in a central server and database of the operating company of the worksite 14, the at least one surveying device 15 and/or the at least one work machine 11. Alternatively, the computer system 16 may be located on the at least one work machine 11 (separately or integrally with the machine control system 20) and/or the at least one surveying device 15. In particular, the computer system 16 as described herein may be embodied as the machine control system 20. Thus any references herein to the performance of a method or operation on the computer system 16 may also be considered to be references to the performance of a method or operating on the machine control system 20 and vice-versa.

The computer system 16 may comprise any known computer system 16, such as a personal computer, laptop, tablet computer, server, smartphone and the like. In particular, the computer system 16 may comprise a memory storing instructions or algorithms as memory data and a processing unit, which may be configured to perform operations based upon the instructions. The memory may comprise any suitable computer-accessible or non-transitory storage medium for storing computer program instructions, such as RAM, SDRAM, DDR SDRAM, RDRAM, SRAM, ROM, magnetic media, optical media and the like. The processing unit may comprise any suitable processor capable of executing memory-stored instructions, such as a microprocessor, uniprocessor, a multiprocessor and the like. The computer system 16 may comprise a plurality of input and/or output devices for providing an input to, or receiving an output from, the processing unit 27. Exemplary input and output devices include displays, keyboards, mice, joysticks, touch screens, buttons, external network interfaces for transferring information to and/or from an external network such as the Internet, other communication ports (e.g. universal serial bus ports), speakers, lights and the like. The computer system 16 may further comprise a graphics processing unit for rendering objects for viewing on a display. The computer system 16 may comprise a computer system communication module for communication with the at least one work machine 11, at least one surveying device 15 and/or the communication system 17.

### THE COMMUNICATION SYSTEM

The communication system 17 may be configured to enable communication between the machine control system(s) 20 of the at least one work machine 11, the at least one surveying device 15, the computer system 16 and/or another machine control system 20 of another work machine 11. The communication system 17 and associated machine, computer system and surveying device communication modules 25 may comprise any type suitable apparatus for communication therebetween, particularly a wireless or wired network. Exemplary wireless networks include a satellite communication network, broadband communication network, cellular, Bluetooth, microwave, point-to-point wireless, point-to-multipoint wireless, multipoint-to-multipoint wireless, Wireless Local Service (WiFi Dongle), Dedicated Short-Range Communications (DSRC) or any other wireless communication network. Exemplary wired networks include Ethernet, fibre optic, waveguide or any other suitable wired connection.

As discussed above, the at least one work machine 11 may comprise the computer system 16 and/or the at least one surveying device 15, which may form part of the machine control system 20. Therefore, the system 10 may not comprise the communication system 17 or the communication system 17 may be embodied as connections between the aforementioned components of the machine control system 20.

### SYSTEM OPERATION

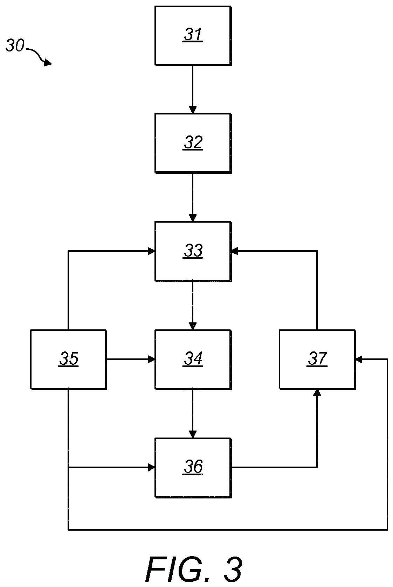

An exemplary method 30 of operating the system 10 is illustrated in Figure 3. The method 30 may comprise at least one surface profile generating step 31, area determination stem 32, retrieval step 33, operating step 34, machine position generating step 35, monitoring step 36 and data update step 37.

In the surface profile generating step 31 surface profile data may be generated. At least one surveying device 15 may travel over the worksite 14, measure the topography of the terrain 13 with reference to at least one reference location on the worksite 14 and generate point cloud data indicative of the actual three-dimensional surface profile of the worksite 14. Therefore, actual surface profile data may be generated. The actual surface profile data may be communicated to the at least one work machine 11 and/or computer system 16, for example via the communication system 17. The at least one surveying device 15 may measure at least the topography of at least one area 19 and/or route 12, which may be a predetermined route 12 for movement of at least one work machine 11 between first and second locations. However, instead, the at least one surveying device 15 may measure the topography of the entire terrain 13 rather than just a certain route 12. For example, the worksite 14 may be defined as being within boundaries, for example having a polygonal shape. The boundaries may include a plurality of haul routes located within them. The at least one surveying device 15 may be controlled to travel between the boundaries to generate point cloud data indicative of the entire surface profile in the worksite 14.

In the area determination step 32 the computer system 16 may identify at least one area 19 of the terrain 13 and at least one gradient characteristic of the at least one area 19. In particular, the computer system 16 may break down the terrain 13 into a plurality of areas 19 of the same size, such as by each area 19 forming a square of a grid. Alternatively, as illustrated in Figure 1, the computer system 16 may be configured to assign an area 19 to a region of the terrain 13 having similar gradient characteristics (e.g. having a similar angle of inclination or the like). The computer system 16 may initially break down the terrain 13 into a grid, asses the gradient characteristics of each square of the grid and then form at least one area 19 from a plurality of squares of the grid across which the gradient characteristics are similar, such as by falling within a predetermined range.

A single gradient value, range and/or variation may form at least one gradient characteristic associated with an area 19. In particular, the at least one gradient characteristic may comprise the average, median and/or maximum of at least one value, range and/or variation of the gradient across the entire area 19. For example, the angle of inclination may be determined from the angle or height between opposing sides of each square of the grid, regardless of the variation of terrain across the area 19. Alternatively, the gradient variation of an area 19 may be the average, median and/or maximum of the frequency and/or amplitude of variations across the area 19.

A gradient characteristic may be associated with an area 19 if the gradient characteristic meets a characteristic threshold, such as whether the gradient characteristic is deemed to affect operation of the at least one work machine 11. For example, a gradient characteristic may be associated with an area 19 if the gradient characteristic extends for a threshold distance along the terrain 13. The threshold distance may be a specified value and/or may be based upon the length of the at least one work machine 11 and/or its wheel base. For example, an inclination of the terrain 13 may be identified and associated with an area 19 if the inclination extends along a distance of at least the wheel base of at least one work machine 11. Alternatively, the threshold distance may be calculated utilising a machine speed and a preset time period (e.g. 10 seconds). Alternatively, the gradient characteristic may only be associated with an area 19 if the value, range and/or variation is above a characteristic threshold.

A gradient characteristic may be determined by assessing the point cloud data of the actual surface profile data and the gradient characteristic may comprise a gradient event. The gradient event may, for example, be a bump, pot hole, ditch, rock, cliff or the like. The point cloud data may be processed to identify variation of a predetermined percentage of adjacent points by a preset distance and associate the variation with the gradient event. For example a variation of 80% of adjacent points by at least 100 mm, relative to surrounding points, may indicate the presence of a pot hole. Machine operational data may be associated with each gradient event.

The at least one gradient characteristic of at least one area 19 may be characterised as falling within gradient bins or ranges. Each gradient bin may comprise an increment of an angle of inclination (e.g. 2% grade increments, such that each bin covers a grade range of 0% to 2%, 2% to 4%, 4% to 6% etc.) and/or variation (e.g. certain ranges of amplitudes and/or frequencies of bumps). The terrain 13 of at least one area 19 may be assessed and assigned a certain gradient bin. Machine operational data may be associated with each gradient bin. In a particular example, the terrain 13 may be divided into a square grid, where each square of the grid has sides of 5 meters long and forms an area 19. An area 19 may be assigned at least one gradient bin as the at least one gradient characteristic, provided that the at least one gradient bin covers at least two or more adjacent squares.

In the retrieval step 33 the computer system 16 may retrieve machine operational data associated with the at least one gradient characteristic of at least one area 19. The machine operational data may be stored on a memory of the computer system 16. As described in further detail below, the machine operational data may be related to at least one of: at least one controllable characteristic of the at least one work machine 11 moving along the terrain 13; a maximum machine speed; a machine rollover likelihood; a worksite duty segment; vibration characteristics of the at least one work machine; an optimal route of the at least one work machine across the at least one area 19; and the like.

In the operating step 34 the at least one work machine may be operated in the at least one area 19 based upon the machine operational data retrieved in the retrieval step 33 for the at least one area 19. In particular, as described in further detail below, in the operating step 34 at least one of: the at least one controllable characteristic may be controlled; the at least one work machine 11 may be operated to move over the at least one area 19 at or below the maximum machine speed; the at least one work machine 11 may be operated in the at least one area 19 based upon the rollover likelihood; an alert for an operator may be generated and the alert may be indicative of the worksite duty segment and/or vibration characteristics; the at least one work machine 11 may be operated to move over the worksite 14 in accordance with the vibration characteristics; the at least one work machine 11 may be operated to move along the optimal route; and the like.

In the machine position generating step 35 route data may be generated. In particular, the navigation system may determine actual coordinates indicative of the position of the work machine 11 as it moves along the route 12 and generate route data indicative of the route 12.

In the monitoring step 36 at least one operating condition of the at least one work machine 11 may be monitored whilst the at least one work machine operates in the at least one area and monitored machine operational data generated indicative of the at least one operating condition. The monitored machine operational data may be utilised in the retrieval step 33, so that monitoring step 36 may be concurrent with or before the retrieval step 33. In particular, in the memory the machine operational data may be associated with the at least one gradient characteristic based upon at least one monitored operating condition of the at least one work machine 11. A monitored operating condition may be the orientation of the at least one work machine 11 to a gradient, which may be obtained via an inclination sensor and/or route data. A monitored operating condition may be the centre of gravity of the at least one work machine 11. The centre of gravity may be determined utilising a known centre of gravity of the at least one work machine 11 and by calculating the effect on the centre of gravity of the at least one work machine 11 by a payload in a work tool 18 (such as a dump body), which may be determined utilising a payload sensor. Alternatively, the at least one monitored operating condition may be representative of the machine operational data associated with the at least one gradient characteristic and may be utilised in the data update step 37.

The at least one monitored machine operating condition may relate to at least one input 22 indicative of the actual inputs received from an operator, such as throttle position, gear selection, steering wheel or joystick manipulation, brake pedal application, retarder application and the like. The at least one monitored machine operating condition may relate to at least one output 23 indicative of the actual outputs resulting from at least one input 22 from an operator, such as engine speed, machine speed (i.e. the actual speed of the at least one machine 11 moving over the terrain 13), gear selection, direction of travel or the route 12, a differential lock engagement and the like. The machine control system 20 may monitor both at least one input 22 and at least one output 23 in order to account for both operator control and automatic control of the at least one output 23. Alternatively, the at least one monitored machine operating condition may be determined from the data received from the at least one sensor 24.

In the data update step 37 the machine position data and monitored machine operational data obtained in the machine position generating step and monitoring step may be used to update the machine operational data stored on the memory. In particular, the machine position data may be utilised to identify the area 19 from which the monitored machine operational data is generated. The at least one gradient characteristic of the identified area may be determined. The monitored machine operational data may subsequently be associated with the at least one identified gradient characteristic, for example by replacing the machine operational data previously associated with the at least one identified gradient characteristic.

### INDUSTRIAL APPLICATION

The machine operational data may comprise at least one controllable characteristic of the at least one work machine 11 moving along the terrain and associated with at least one gradient characteristic. The at least one controllable characteristic may comprise any part or machine structure of the at least one work machine 11 that is controllable by an operator and/or automatically, such as any of the inputs and/or outputs 22, 23 discussed above. In particular, the at least one controllable characteristic may comprise at least one of a machine speed, a machine direction, an engine speed, a powertrain load, a braking or retarding load, gear selection or transmission ratio, positioning of at least one work tool 18, manipulation of at least one work tool 18, a payload of a dump body and the like.

In the retrieval step 33 the appropriate at least one controllable characteristic may be retrieved from the memory and in the operating step 34 the at least one work machine may be operated in the at least one area 19, such as by moving across the at least one area 19 in accordance with the at least one controllable characteristic or by operating the at least one work tool 18 in accordance with the at least one controllable characteristic. The at least one controllable characteristic may also be associated with at least one gradient characteristic based upon the orientation of the at least one work machine 11 relative to an angle of inclination of the gradient of the at least one area 19 and/or the centre of gravity of the at least one work machine 11.

The machine operational data may comprise a single value or range of the at least one controllable characteristic suited to the at least one gradient characteristic. Thus the machine operational data may comprise a range or value of machine speed, engine speed, engine mapping, traction control, retarder application, transmission selection or directions along the gradient and/or the like. For example, the controllable characteristic database may comprise a machine speed or transmission selection suitable for travelling along a gradient of a certain angle of inclination that improves engine efficiency. Alternatively, the controllable characteristic database may comprise a traction control implementation suitable for a certain frequency of variation of the gradient. The controllable characteristic database may comprise a suitable retarder (e.g. a brake or engine braking) application based upon an angle of downward inclination. The controllable characteristic database may further comprise a suitable machine direction for travelling over a gradient at a certain angle of inclination or variation that improves efficiency and/or ensures that the at least one work machine 11 operates safely over the area 19.

In particular, at least one controllable characteristic may comprise a maximum machine speed value associated with at least one gradient characteristic and the at least one work machine 11 may be operated to move over the at least one area 19 of the terrain at or below the maximum machine speed. For example, a maximum machine speed may be set to ensure that the at least one work machine 11 is not operated on an angle of inclination at a safe speed or is not operated over a variation of the terrain 13, such as a series of bumps, that may result in unacceptably high stress and/or strain to at least one machine structure. The maximum machine speed limit for at least one gradient characteristic may be stored on a controllable characteristic database or may be determined with an algorithm by the computer system 16. The operator may be notified of the maximum machine speed limit or the maximum machine speed limit may be communicated to the machine control system 20, which may subsequently maintain the at least one work machine 11 at or below the maximum speed limit when passing over the at least one area 19.

In particular, at least one controllable characteristic may comprise a machine direction for controlling the direction of the at least one work machine 11 over the area 19. The machine direction may be implemented automatically in an autonomous machine or by an operator upon receipt of an alert indicative of the machine direction. The machine direction may comprise a direction of travel over the area 19 that is safe, such as one that avoids rollover. Alternatively, the machine direction may comprise a direction of travel over the terrain 13 that entirely avoids the at least one area 19, such as when the at least one area 19 has an angle of inclination or gradient variation that is entirely unsuitable for the at least one work machine 11.

The controllable characteristic database may comprise statuses of at least one controllable characteristic suitable for the at least one gradient characteristic. A status may be whether to implement at least one of an engine economy mode, a certain engine mapping, a traction control application, a retarder application, a transmission shift strategy, a transmission shift for retarding the at least one work machine 11 and/or the like.

The at least one controllable characteristic value, range and/or status may be associated with at least one gradient characteristic based upon at least one of an algorithm, an operator input, a database or the like. The algorithm may depend upon the controllable characteristic: for example, a machine speed may be associated with a range of inclinations of the terrain 13 based upon an algorithm. The computer system 16 may store a controllable characteristic database, such as in a look-up table, on its memory containing values, ranges or statuses of at least one controllable characteristic associated with at least one gradient characteristic. The controllable characteristic database may be populated based upon user input and/or by historical data associated with the appropriate at least one controllable characteristic and the at least one gradient characteristic.

The association(s) between the at least one controllable characteristic value, range and/or status and at least one gradient characteristic may be updated via the monitoring and data update steps 36, 37. In particular, the at least one monitored operating condition may be the same as at least one controllable characteristic and the controllable characteristic database may be updated to reflect the at least one monitored operating condition actually used over at least one gradient characteristic. For example, the machine speed may be monitored over at least one area 19 and the controllable characteristic database updated to show the monitored machine speed as being associated with the at least one gradient characteristic.

The at least one monitored operating condition may be the stress and/or strain value and/or rate of change on at least one machine structure of the at least one work machine 11. The at least one sensor 24 may be operable to generate stress and/or strain data indicative of the stress and/or strain on at least one machine structure as the at least one work machine 11 operates in an area 19. The computer system 16 may be configured to process the stress and/or strain data and update at least one controllable characteristic associated with at least one gradient characteristic of the area 19 based upon the stress and/or strain data.

In particular, a machine speed value and/or range may be determined based upon the stress and/or strain rate and/or value exceeding a threshold stress and/or strain rate and/or value. The machine speed value and/or range of at least one gradient characteristic may be set such that the stress and/or strain rate and/or value does not meet and/or exceed the threshold stress and/or strain rate and/or value. Therefore, if the threshold stress and/or strain rate and/or value is exceeded across at least one area 19 the machine speed value and/or range associated with at least one gradient characteristic of the at least one area 19 may be adjusted to avoid it in the future. For example the machine speed value and/or range stored in the controllable characteristic database may be lowered. The maximum machine speed limit may be set at the stress and/or strain rate and/or value that meets or falls just below the threshold stress and/or strain rate and/or value.

In particular, a machine direction may be determined based upon the stress and/or strain rate and/or value exceeding a threshold stress and/or strain rate and/or value. The machine direction may be adjusted to ensure that the at least one work machine 11 only travels over areas 19 that do not result in the threshold stress and/or strain rate and/or value being exceeded. If the threshold stress and/or strain rate and/or value is exceeded across at least one area 19, the machine direction associated with at least one gradient characteristic of the at least one area 19 may be adjusted to avoid a similar at least one gradient characteristic in the future.

The at least one monitored operating condition may be any other condition of at least one machine structure. In particular, the at least one monitored operating condition may be a temperature of at least one machine structure, such as coolant or engine temperature. The at least one controllable characteristic may be set to ensure that an optimal temperature value or range is kept, the temperature is maintained within a range, a maximum temperature is not exceeded or the temperature does not fall below a minimum temperature. For example, the machine speed may be selected to meet the temperature requirements of at least one machine structure. If, during the monitoring step 36, the temperature does not meet the requirements in at least one area 19, then the at least one controllable characteristic associated with the at least one gradient characteristic of the at least one area 19 may be updated such that, in future, the temperature requirements are met for the at least one gradient characteristic.

The machine operational data may comprise a rollover likelihood status or value indicative of whether the at least one work machine 11 is likely to rollover in the at least one area 19 based upon the at least one gradient characteristic. The rollover likelihood value may be indicative of the likelihood or probability of the at least one work machine 11 rolling over at the at least one gradient characteristic. For example, the rollover likelihood value may be high when the at least one area 19 has a particularly high angle of inclination. The rollover likelihood status or value may particularly be based upon the orientation of the at least one work machine 11 relative to an angle of inclination of the gradient of the at least one area 19 and/or the centre of gravity of the at least one work machine 11. Therefore, for example, the rollover likelihood status may also identify the likelihood of at least one work machine 11 rolling over when the at least one work machine 11 is in line with the angle of inclination (e.g. a lower likelihood of rollover) and when the at least one work machine 11 is across the angle of inclination (e.g. a higher likelihood of rollover).

If the rollover likelihood value in at least one area 19 exceeds a rollover threshold, or the rollover likelihood status indicates that rollover is likely, the at least one work machine 11 may be operated to avoid the at least one area 19 and/or at least one controllable characteristic may be operated to prevent rollover as the at least one work machine 11 travels over the at least one area 19. For example, the machine speed may be reduced and/or the machine direction altered such that the at least one work machine 11 travels over the at least one area 19 in a direction that ensures that rollover does not occur or is unlikely. At least one controllable characteristic may comprise a dump body status indicative as to whether the dump body is suitable to be raised under the at least one gradient characteristic, particularly with reference to the orientation of the at least one work machine 11 to an angle of inclination of the at least one work machine 11 and/or its centre of gravity. The rollover likelihood value or status may be associated with the pivot angle of the dump body as it is raised to eject material therefrom and may rise as the pivot angle increases, indicating a higher centre of gravity of the at least one work machine 11. The dump body status may indicate that at least one area 19 is suitable or not suitable for pivoting the dump body provided that the rollover likelihood value is below the rollover threshold and/or the rollover likelihood status indicates that rollover is unlikely or will not occur in the at least one area 19.

The machine operational data may comprise a worksite duty segment associated with the at least one gradient characteristic and the at least one work machine 11 may be operated to alert the operator to the worksite duty segment associated with the at least one area 19 and/or worksite 14. The computer system 16 may store data related to a plurality of worksite duty segments, such as a light duty segment, at least one medium duty segment or a heavy duty segment. The computer system 16 may also associate each worksite duty segment to a range and/or value of at least one gradient characteristic, which may have been determined based upon historical stress and/or strain rates associated with the at least one gradient characteristic. The low duty segment may be associated with a range below a first duty threshold and the high duty segment may be associated with a range above the first or a second duty threshold, the second duty threshold being above the first duty threshold. The at least one medium duty segment may define one or more ranges between the first and second duty thresholds. The worksite duty segment across the entire worksite 14 may be set based upon the average, modal and/or maximum duty segment across all of the areas 19 of the worksite 14.

The computer system 16 may store data associated with a plurality of work machines 11, a plurality of worksite duty segments and the suitability of each of the plurality of work machines 11 to each of the plurality of worksite duty segments. The computer system 16 may assess the suitability of the at least one work machine 11 to the worksite 14 based upon the assessment of the duty segment of at least one area 19 and/or all of the areas 19 of the worksite 14. If the at least one work machine 11 is not suitable for the worksite duty segment associated with the worksite 14 and/or at least one area 19, the computer system 16 may generate an alert to an operator and may propose at least one different work machine 11 that is more suitable for the worksite duty segment.

Based upon the worksite duty segment analysis the computer system 16 may further be configured to perform a warranty analysis in which a warranty period may be determined based upon at least one gradient characteristic of at least one area 19. Therefore, the system 10 may be utilised to specify variable warranties of the at least one work machine 11 depending upon the worksite duty segment of the worksite 14 and/or at least one area 19 of the worksite 14. A "warranty" may be considered in the present disclosure to be a guarantee, issued to the operator of the at least one work machine 11 by its manufacturer and/or seller, promising to repair or replace the at least one work machine 11 and/or a part thereof if necessary within a specified "warranty period", which may be a time warranty period. One or more warranty time value or ranges may be associated with each worksite duty segment. As a result, if an operator operates the at least one work machine 11 under very heavy duty conditions (e.g. a route 12 covering a relatively large number of areas 19 having a heavy duty worksite segment) the warranty may be reduced or cancelled accordingly. The at least one work machine 11 may be operated to alert the operator to the warranty period or an extension or reduction thereof.

The machine operational data may relate to at least one vibration characteristic of the at least one work machine 11 associated with the at least one gradient characteristic of the at least one area 19. The at least one work machine 11 may be operated to generate an alert for an operator indicative of the at least one vibration characteristic of the at least one area 19. The at least one work machine 11 may also or alternatively be operated to move over the worksite 14 in accordance with the at least one vibration characteristic. The at least one vibration characteristic may be based upon the frequency and/or amplitude of variations of the terrain 13 of the at least one area 19. The machine operational data relating at least one vibration characteristic to at least one gradient characteristic may be collected and/or updated by, for example, output from an accelerometer of at least one work machine 11 passing over at least one area 19 having the at least one gradient characteristic.

The at least on vibration characteristic may relate to the effect vibrations of the at least one work machine 11 may have on an operator and/or at least one machine structure of the at least one work machine 11. It is known that certain amplitudes and/or totals of vibrations (e.g. Vibration Total Value (VTV)) result in or accelerate operator fatigue. As a result, the at least one work machine 11 may alert the operator to at least one area 19 that might result in excessive vibrations. Alternatively, the at least one work machine 11 may be operated at a machine speed and/or direction that reduces the effects of the at least vibration characteristics of the at least one area 19. For example, the at least one work machine 11 may be operated to avoid at least one area 19 where at least on vibration characteristic exceeds a vibration threshold. The machine speed may be limited across at least one at least one area 19 where at least one vibration characteristic exceeds a vibration threshold.

The machine operational data may relate to an optimal route 12 of the at least one work machine 11 across a plurality of areas 19 and/or worksite 14 and the at least one work machine 11 may be controlled to follow the optimal route 12. As discussed above, the machine direction may be controlled across at least one area 19. The optimal route 12 across the worksite 14 may be based upon the optimal route 12 across a plurality of areas 19. The optimal route 12 may also be selected based upon the machine productivity along the route 12. The optimal route 12 may be determined utilising any analytical method known in the art, such as a neural network algorithm or the like. In particular, the analytical method may comprise assessing a plurality of routes 12 across the terrain 13 between first and second locations. The plurality of routes 12 may be stored on a database and may be specified by an operator. The computer system 16 may determine the efficiency of each of the plurality of routes 12, for example based upon efficiency data associated with at least one gradient characteristic. The efficiency data may be fuel efficiency, stress and/or strain, efficient machine speed and the like of the at least one machine 11 as it crosses each at least one area 19. The optimal route 12 may be the route 12 with the optimal efficiency. The plurality of routes 12 may be segmented between first and second locations and each segment assessed individually. In a particular example, a plurality of routes 12 may be segmented. The stress and/or strain on at least one machine structure when travelling across the at least one area 19 of each segment may be assessed. The optimal route 12 may be the route 12 comprising the segments having the lowest total summation of stress and/or strain on the at least one machine structure.

The at least one work machine 11 may also be operated in accordance with any of the above operations to adjust at least one gradient characteristic of at least one area 19. If a variation amplitude and/or frequency of the terrain 13 of at least on area 19 is above a threshold the at least one work machine 11 may be operated to reduce the variation amplitude and/or frequency. The at least one work machine 11, which may be a compactor or any other type of work machine 11, may be operated manually or autonomously to travel to the location of the at least one area 19 and adjust the terrain 13 to remove, or reduce the negative impact of, the variation amplitude and/or frequency. For example, the at least one work machine 11 may smooth or compact the terrain 13 of the at least one area 19. As a result, the terrain 13 of the worksite 14 may be optimised for operating of at least one work machine 11 thereon.

## Claims

1. A method of operating at least one work machine (11) comprising:
operating at least one surveying device (15) to measure a surface profile of a terrain (13) of a worksite (14) and generate actual surface profile data indicative of the surface profile;
storing machine operational data associated with at least one gradient characteristic in a database;
operating a processing unit (27) to:
process the surface profile data to identify at least one area (19) of the terrain (13) and at least one gradient characteristic of the at least one area (19);
retrieve machine operational data associated with the at least one gradient characteristic from the database and associate the machine operational data with the at least one area (19); and
operating the at least one work machine (11) in the at least one area (19) over the at least one gradient characteristic based upon the machine operational data.

2. A method as claimed in any one of the preceding claims wherein the machine operational data comprises at least one controllable characteristic, of the at least one work machine (11) moving along the terrain, associated with at least one gradient characteristic.

3. A method as claimed in claim 2 wherein the at least one controllable characteristic comprises at least one of a machine speed, a machine direction, an engine speed, a powertrain load, a braking or retarding load, gear selection or transmission ratio, positioning of at least one work tool of the at least one work machine (11), manipulation of at least one work tool (18), a payload of the at least one work machine (11) and the like.

4. A method as claimed in any one of the preceding claims wherein the machine operational data relates to a maximum machine speed associated with at least one gradient characteristic and the at least one work machine (11) is operated to move over the at least one area (19) of the terrain (13) at or below the maximum machine speed.

5. A method as claimed in any one of the preceding claims wherein the machine operational data relates to a rollover likelihood, a rollover likelihood value being indicative of the likelihood of the at least one work machine (11) rolling over at the at least one gradient characteristic, and the at least one work machine (11) is operated in the at least one area (19) based upon the rollover likelihood when the rollover likelihood value exceeds a rollover threshold.

6. A method as claimed in any one of the preceding claims wherein the machine operational data relates to a worksite duty segment associated with the at least one gradient characteristic, and operating the at least one work machine (11) comprises generating an alert for an operator, the alert being indicative of the worksite duty segment.

7. A method as claimed in any one of the preceding claims wherein the machine operational data relates to at least one vibration characteristic of the at least one work machine (11) associated with the at least one gradient characteristic, and operating the at least one work machine (11) comprises generating an alert for an operator, the alert being indicative of the at least one vibration characteristic, and/or operating the at least one work machine (11) to move over the worksite in accordance with the at least one vibration characteristic.

8. A method as claimed in any one of the preceding claims wherein the machine operational data relates to an optimal route of the at least one work machine (11) associated with the at least one gradient characteristic.

9. A method as claimed in any one of the preceding claims further comprising receiving data from at least one sensor (24) of the at least one work machine (11) indicative of the orientation of the at least one work machine (11) to the gradient, the machine operational data being associated with the at least one gradient characteristic based upon the orientation the at least one work machine (11).

10. A method as claimed in any one of the preceding claims further comprising receiving data from at least one sensor (24) of the at least one work machine (11) indicative of the centre of gravity of the at least one work machine (11), the machine operational data being associated with the at least one gradient characteristic based upon the centre of gravity of the at least one work machine (11).

11. A method as claimed in any one of the preceding claims wherein the at least one gradient characteristic comprises at least one of a value, range and/or variation of the gradient of the area (19).

12. A method as claimed in any one of the preceding claims further comprising:
operating at least one work machine (11) to move along an area (19) of the terrain (13);
operating at least one sensor (24) to generate monitored machine operational data indicative of at least one monitored operating condition of the at least one work machine (11) whilst the at least one work machine (11) operates in the area (19);
determining at least one gradient characteristic of the area (19);
storing machine operational data associated with the at least one gradient characteristic based upon the monitored machine operational data.

13. A method as claimed in claim 12 when dependent upon any one of claims 2 to 11 wherein the at least one monitored operating condition relates to:
a stress and/or strain on at least one machine structure of the at least one work machine (11);
a temperature of at least one machine structure; and/or
vibration characteristics of the at least one work machine (11).

14. A method as claimed in claim 13, when dependent upon any one of claims 2 to 12, wherein the machine operational data comprises at least one controllable characteristic associated with at least one gradient characteristic and the stress and/or strain, and:
the at least one controllable characteristic relates to a machine speed value and/or range determined based upon the stress and/or strain exceeding a threshold stress and/or strain; and/or
the at least one controllable characteristic relates to a machine direction determined based upon the stress and/or strain exceeding a threshold stress and/or strain.

15. A system for controlling at least one work machine (11) comprising:
at least one surveying device (15) configured to measure a surface profile of a terrain (13) of a worksite (14) and generate actual surface profile data indicative of the surface profile;
a computer system (16) comprising a processing unit (27) and configured to:
store machine operational data associated with at least one gradient characteristic in a database;
process the surface profile data to identify at least one area (19) of the terrain (13) and at least one gradient characteristic of the at least one area (19); and
retrieve machine operational data associated with the at least one gradient characteristic from the database and associate the machine operational data with the at least one area (19); and
at least one work machine (11) configured to move over the terrain (13) and at least one gradient characteristic based upon the machine operational data.

## Patentansprüche

1. Verfahren zum Betreiben mindestens einer Arbeitsmaschine (11), umfassend:
Betreiben mindestens einer Vermessungsvorrichtung (15), um ein Oberflächenprofil eines Geländes (13) einer Arbeitsstätte (14) zu vermessen und tatsächliche Oberflächenprofildaten zu erzeugen, die für das Oberflächenprofil kennzeichnend sind;
Speichern von Maschinenbetriebsdaten, die mindestens einer Gradienteneigenschaft zugeordnet sind, in einer Datenbank;
Betreiben einer Verarbeitungseinheit (27) zum:
Verarbeiten der Oberflächenprofildaten, um mindestens einen Bereich (19) des Geländes (13) und mindestens eine Gradienteneigenschaft des mindestens einen Bereichs (19) zu identifizieren;
Abrufen von Maschinenbetriebsdaten, die der mindestens einen Gradienteneigenschaft zugeordnet sind, aus der Datenbank und Zuordnen der Maschinenbetriebsdaten zu dem mindestens einen Bereich (19); und
Betreiben der mindestens einen Arbeitsmaschine (11) in dem mindestens einen Bereich (19) über der mindestens einen Gradienteneigenschaft basierend auf den Maschinenbetriebsdaten.

2. Verfahren nach einem der vorhergehenden Ansprüche, wobei die Maschinenbetriebsdaten mindestens eine steuerbare Eigenschaft der mindestens einen sich entlang des Geländes bewegenden Arbeitsmaschine (11) umfassen, die mindestens einer Gradienteneigenschaft zugeordnet ist.

3. Verfahren nach Anspruch 2, wobei die mindestens eine steuerbare Eigenschaft mindestens eines von einer Maschinengeschwindigkeit, einer Maschinenrichtung, einer Motordrehzahl, einer Antriebsstranglast, einer Brems- oder Verzögerungslast, einer Gangwahl oder einem Übersetzungsverhältnis, einer Positionierung mindestens eines Arbeitswerkzeugs der mindestens einen Arbeitsmaschine (11), einer Manipulation mindestens eines Arbeitswerkzeugs (18), einer Nutzlast der mindestens einen Arbeitsmaschine (11) und dergleichen umfasst.

4. Verfahren nach einem der vorhergehenden Ansprüche, wobei sich die Maschinenbetriebsdaten auf eine maximale Maschinengeschwindigkeit beziehen, die mindestens einer Gradienteneigenschaft zugeordnet ist, und die mindestens eine Arbeitsmaschine (11) so betrieben wird, dass sie sich über den mindestens einen Bereich (19) des Geländes (13) bei oder unter der maximalen Maschinengeschwindigkeit bewegt.

5. Verfahren nach einem der vorhergehenden Ansprüche, wobei sich die Maschinenbetriebsdaten auf eine Überschlagwahrscheinlichkeit beziehen, wobei ein Überschlagwahrscheinlichkeitswert die Wahrscheinlichkeit angibt, mit der sich die mindestens eine Arbeitsmaschine (11) bei der mindestens einen Gradienteneigenschaft überschlägt, und die mindestens eine Arbeitsmaschine (11) in dem mindestens einen Bereich (19) basierend auf der Überschlagwahrscheinlichkeit betrieben wird, wenn der Überschlagwahrscheinlichkeitswert einen Überschlagschwellenwert überschreitet.

6. Verfahren nach einem der vorhergehenden Ansprüche, wobei sich die Maschinenbetriebsdaten auf ein Arbeitsstättenarbeitssegment beziehen, das der mindestens einen Gradienteneigenschaft zugeordnet ist, und das Betreiben der mindestens einen Arbeitsmaschine (11) das Erzeugen eines Alarms für einen Bediener umfasst, wobei der Alarm auf das Arbeitsstättenarbeitssegment hinweist.

7. Verfahren nach einem der vorhergehenden Ansprüche, wobei sich die Maschinenbetriebsdaten auf mindestens eine Vibrationseigenschaft der mindestens einen Arbeitsmaschine (11) beziehen, die der mindestens einen Gradienteneigenschaft zugeordnet ist, und das Betreiben der mindestens einen Arbeitsmaschine (11) das Erzeugen eines Alarms für einen Bediener umfasst, wobei der Alarm auf die mindestens eine Vibrationseigenschaft hinweist, und/oder das Betreiben der mindestens einen Arbeitsmaschine (11), so dass sie sich in Übereinstimmung mit der mindestens einen Vibrationseigenschaft über die Arbeitsstätte bewegt.

8. Verfahren nach einem der vorhergehenden Ansprüche, wobei sich die Maschinenbetriebsdaten auf eine optimale Route der mindestens einen Arbeitsmaschine (11) beziehen, die der mindestens einen Gradienteneigenschaft zugeordnet ist.

9. Verfahren nach einem der vorhergehenden Ansprüche, ferner umfassend das Empfangen von Daten von mindestens einem Sensor (24) der mindestens einen Arbeitsmaschine (11), die für die Ausrichtung der mindestens einen Arbeitsmaschine (11) zu dem Gradienten kennzeichnend sind, wobei die Maschinenbetriebsdaten der mindestens einen Gradienteneigenschaft basierend auf der Ausrichtung der mindestens einen Arbeitsmaschine (11) zugeordnet sind.

10. Verfahren nach einem der vorhergehenden Ansprüche, ferner umfassend das Empfangen von Daten von mindestens einem Sensor (24) der mindestens einen Arbeitsmaschine (11), die für den Schwerpunkt der mindestens einen Arbeitsmaschine (11) kennzeichnend sind, wobei die Maschinenbetriebsdaten der mindestens einen Gradienteneigenschaft basierend auf dem Schwerpunkt der mindestens einen Arbeitsmaschine (11) zugeordnet sind.

11. Verfahren nach einem der vorhergehenden Ansprüche, wobei die mindestens eine Gradienteneigenschaft mindestens eines von einem Wert, einem Wertebereich und/oder einer Änderung des Gradienten des Bereichs (19) umfasst.

12. Verfahren nach einem der vorstehenden Ansprüche, ferner umfassend:
Betreiben mindestens einer Arbeitsmaschine (11), so dass sie sich entlang eines Bereichs (19) des Geländes (13) bewegt;
Betreiben mindestens eines Sensors (24), um überwachte Maschinenbetriebsdaten zu erzeugen, die für mindestens einen überwachten Betriebszustand der mindestens einen Arbeitsmaschine (11) kennzeichnend sind, während die mindestens eine Arbeitsmaschine (11) in dem Bereich (19) arbeitet;
Bestimmen mindestens einer Gradienteneigenschaft des Bereichs (19);
Speichern von Maschinenbetriebsdaten, die der mindestens einen Gradienteneigenschaft basierend auf den überwachten Maschinenbetriebsdaten zugeordnet sind.

13. Verfahren nach Anspruch 12, wenn abhängig von einem der Ansprüche 2 bis 11, wobei sich die mindestens eine überwachte Betriebsbedingung auf Folgendes bezieht:
eine Spannung und/oder Dehnung an mindestens einer Maschinenstruktur der mindestens einen Arbeitsmaschine (11);
eine Temperatur von mindestens einer Maschinenstruktur; und/oder Vibrationseigenschaften der mindestens einen Arbeitsmaschine (11).

14. Verfahren nach Anspruch 13, wenn abhängig von einem der Ansprüche 2 bis 12, wobei die Maschinenbetriebsdaten mindestens eine steuerbare Eigenschaft umfassen, die mindestens einer Gradienteneigenschaft und der Spannung und/oder Dehnung zugeordnet ist, und:
die mindestens eine steuerbare Eigenschaft sich auf einen Maschinengeschwindigkeitswert und/oder -wertebereich bezieht, der basierend darauf bestimmt wird, dass die Spannung und/oder Dehnung eine Schwellenspannung und/oder -dehnung überschreitet; und/oder
die mindestens eine steuerbare Eigenschaft sich auf eine Maschinenrichtung bezieht, die basierend darauf bestimmt wird, dass die Spannung und/oder Dehnung eine Schwellenspannung und/oder -dehnung überschreitet.

15. System zum Steuern mindestens einer Arbeitsmaschine (11), umfassend:
mindestens eine Vermessungsvorrichtung (15), die ausgestaltet ist, ein Oberflächenprofil eines Geländes (13) einer Arbeitsstätte (14) zu vermessen und tatsächliche Oberflächenprofildaten zu erzeugen, die für das Oberflächenprofil kennzeichnend sind;
ein Computersystem (16), das eine Verarbeitungseinheit (27) umfasst und ausgestaltet ist zum:
Speichern von Maschinenbetriebsdaten, die mindestens einer Gradienteneigenschaft zugeordnet sind, in einer Datenbank;
Verarbeiten der Oberflächenprofildaten, um mindestens einen Bereich (19) des Geländes (13) und mindestens eine Gradienteneigenschaft des mindestens einen Bereichs (19) zu identifizieren; und
Abrufen von Maschinenbetriebsdaten, die der mindestens einen Gradienteneigenschaft zugeordnet sind, aus der Datenbank und Zuordnen der Maschinenbetriebsdaten zu dem mindestens einen Bereich (19); und
mindestens eine Arbeitsmaschine (11), die ausgestaltet ist, sich über das Gelände (13) zu bewegen, und mindestens eine Gradienteneigenschaft basierend auf den Maschinenbetriebsdaten.

## Revendications

1. Procédé d'actionnement d'au moins une machine de travail (11) comprenant :
l'actionnement d'au moins un dispositif d'étude (15) pour mesurer un profil de surface d'un terrain (13) d'un site de travail (14) et générer des données de profil de surface réelles indicatives du profil de surface ;
le stockage des données opérationnelles de la machine associées à au moins une caractéristique de gradient dans une base de données ;
l'actionnement d'une unité de traitement (27) pour :
le traitement des données de profil de surface pour identifier au moins une zone (19) du terrain (13) et au moins une caractéristique de gradient de l'au moins une zone (19) ;
Récupérer des données opérationnelles associées à l'au moins un élément caractéristique de gradient provenant de la base de données et associer les données opérationnelles de machine avec l'au moins une zone (19) ; et
l'actionnement de l'au moins une machine de travail (11) dans l'au moins une zone (19) sur l'au moins une caractéristique de gradient sur la base des données opérationnelles de la machine.

2. Procédé selon l'une quelconque des revendications précédentes, dans lequel les données opérationnelles de la machine comprennent au moins une caractéristique contrôlable, de l'au moins une machine de travail (11) se déplaçant le long du terrain, associée à au moins une caractéristique de gradient.

3. Procédé selon la revendication 2, dans lequel l'au moins une caractéristique contrôlable comprend au moins l'un d'une vitesse de machine, d'un sens de machine, d'une vitesse de moteur, d'une charge de groupe motopropulseur, d'une charge de freinage ou de retardement, d'un rapport de sélection de vitesse ou de transmission, d'un positionnement d'au moins un outil de travail de l'au moins une machine de travail (11), d'une manipulation d'au moins un outil de travail (18), d'une charge utile de l'au moins une machine de travail (11) et analogues.

4. Procédé selon l'une quelconque des revendications précédentes, dans lequel les données opérationnelles de la machine concernent une vitesse maximale de la machine associée à au moins une caractéristique de gradient et l'au moins une machine de travail (11) est actionnée pour se déplacer sur l'au moins une zone (19) du terrain (13) au niveau ou en dessous de la vitesse de machine maximale.

5. Procédé selon l'une quelconque des revendications précédentes, dans lequel les données opérationnelles de la machine concernent une probabilité de retournement, une valeur de probabilité de retournement étant indicative de la probabilité que l'au moins une machine de travail (11) ne se retourne lorsqu'elle atteint l'au moins une caractéristique de gradient, et l'au moins une machine de travail (11) est actionnée dans l'au moins une zone (19) sur la base de la probabilité de retournement lorsque la valeur de probabilité de retournement dépasse un seuil de retournement.

6. Procédé tel que revendiqué dans l'une quelconque des revendications précédentes, dans lequel les données opérationnelles de la machine concernent un segment de chantier associé à ladite au moins une caractéristique de gradient, et le fonctionnement de ladite au moins une machine de travail (11) comprend la génération d'une alerte pour un opérateur, l'alerte étant indicative d'un segment du chantier.

7. Procédé selon l'une quelconque des revendications précédentes, dans lequel les données opérationnelles de la machine concernent au moins une caractéristique de vibration de l'au moins une machine de travail (11) associée à l'au moins une caractéristique de gradient, et l'actionnement de l'au moins une machine de travail (11) comprend la génération d'une alerte pour un opérateur, l'alerte indiquant l'au moins une caractéristique de vibration, et/ou l'actionnement de l'au moins une machine de travail (11) pour se déplacer sur le site de travail conformément à l'au moins une caractéristique de vibration.

8. Procédé selon l'une quelconque des revendications précédentes, dans lequel les données opérationnelles de la machine concernent une voie optimale de l'au moins une machine de travail (11) associée à l'au moins une caractéristique de gradient.

9. Procédé selon l'une quelconque des revendications précédentes, comprenant en outre la réception de données provenant d'au moins un capteur (24) de l'au moins une machine de travail (11) indicatives de l'orientation de l'au moins une machine de travail (11) par rapport au gradient, les données opérationnelles de la machine étant associées à l'au moins une caractéristique de gradient sur la base de l'orientation de l'au moins une machine de travail (11).

10. Procédé selon l'une quelconque des revendications précédentes, comprenant en outre la réception de données provenant d'au moins un capteur (24) de l'au moins une machine de travail (11) indicatives du centre de gravité de l'au moins une machine de travail (11), les données opérationnelles de la machine étant associées à l'au moins une caractéristique de gradient sur la base du centre de gravité de l'au moins une machine de travail (11).

11. Procédé selon l'une quelconque des revendications précédentes, dans lequel l'au moins une caractéristique de gradient comprend au moins l'une d'une valeur, d'une plage et/ou d'une variation du gradient de la zone (19).

12. Procédé selon l'une quelconque des revendications précédentes, comprenant en outre :
l'actionnement de l'au moins une machine de travail (11) pour se déplacer le long d'une zone (19) du terrain (13) ;
l'actionnement d'au moins un capteur (24) pour générer des données opérationnelles de la machine surveillées indicatives d'au moins une condition de fonctionnement surveillée de l'au moins une machine de travail (11) alors que l'au moins une machine de travail (11) fonctionne dans la zone (19) ;
la détermination d'au moins une caractéristique de gradient de la zone (19) ;
le stockage des données opérationnelles de la machine associées à au moins une caractéristique de gradient basée sur les données opérationnelles surveillées.

13. Procédé selon la revendication 12 lorsqu'elle dépend de l'une quelconque des revendications 2 à 11, dans lequel l'au moins une condition de fonctionnement surveillée concerne :
un stress et/ou une contrainte sur au moins une structure de machine de l'au moins une machine de travail (11) ;
une température d'au moins une structure de machine ; et/ou des caractéristiques de vibration de l'au moins une machine de travail (11).

14. Procédé selon la revendication 13, lorsqu'elle dépend de l'une quelconque des revendications 2 à 12, dans lequel les données opérationnelles de machine comprennent au moins une caractéristique contrôlable associée à au moins une caractéristique de gradient et au stress et/ou à la contrainte, et :
l'au moins une caractéristique contrôlable concerne une valeur et/ou une plage de vitesse de machine déterminée sur la base du stress et/ou de la contrainte dépassant un seuil de stress et/ou contrainte ; et/ou
l'au moins une caractéristique contrôlable concerne un sens de la machine déterminé sur la base du stress/de la contrainte dépassant un seuil de stress et/ou contrainte.

15. Système de commande d'au moins une machine de travail (11) comprenant :
au moins un dispositif d'étude (15) configuré pour mesurer un profil de surface d'un terrain (13) d'un site de travail (14) et générer des données de profil de surface réelles indicatives du profil de surface ;
un système informatique (16) comprenant une unité de traitement (27) et configuré pour :
stocker les données opérationnelles de la machine associées à au moins une caractéristique de gradient dans une base de données ;
traiter les données de profil de surface pour identifier au moins une zone (19) du terrain (13) et au moins une caractéristique de gradient de l'au moins une zone (19) ; et
récupérer des données opérationnelles associées à l'au moins un élément caractéristique de gradient provenant de la base de données et associer les données opérationnelles de machine avec l'au moins une zone (19) ; et
au moins une machine de travail (11) configurée pour se déplacer sur le terrain (13) et au moins une caractéristique de gradient sur la base des données opérationnelles de la machine.
